# EUROPEAN PATENT APPLICATION

(11) **EP 4 145 287 A1**
(43) Date of publication of application: **08.03.2023**
(21) Application number: 21194720.5
(22) Date of filing: 03.09.2021
(51) Int. Cl.: G06F 9/54, G06F 8/656

(54) **EMBEDDED CONTROL DEVICE, METHOD FOR UPDATING A BROKER UNIT OF THE EMBEDDED DEVICE AND COMPUTER PROGRAM PRODUCT**

(71) Applicant: Siemens Aktiengesellschaft, 80333 München (DE)
(72) Inventor: Telschig, Kilian, 81543 München (DE); Piskol, Thomas, 90556 Seukendorf (DE); Polster, Klaus, 90411 Nürnberg (DE); Wigger, Frank, 90441 Nürnberg (DE)
(74) Representative: Siemens Patent Attorneys

(57) **Abstract**

An embedded control device (1) is provided that is configured to concurrently execute a number of control apps (10) for controlling a technical system (2), the embedded control device (1) comprising a number of units comprising: a broker unit (3) configured to provide a message bus (5) enabling serialized publish/subscribe topic-based communication between any of the number of control apps (10), the number of units, and the technical system (2), and an updater unit (4) configured to: in response to a new instance (20b) of the broker unit (3) being executed on the embedded control device (1) in addition to the old instance (20a) of the broker unit (3), publish an update topic on the message bus (5); and cause a handover of control from the old instance (20a) to the new instance (20b) of the broker unit (3) by transmitting a switch command in the update topic on the message bus (5).

Also provided are a method for updating a broker unit of an embedded control device and a computer program product.

The invention enables broker unit updates without downtime.

## Description

The present invention relates to the field of industrial control systems, and more particular to an embedded control device, and a method and a computer program product to be used with the embedded control device.

Embedded control devices (or "embedded devices") are used in the field of industrial control to perform a dedicated control function within a technical system, the technical system being a larger mechanical or electrical system the embedded device is embedded with. Example applications include critical infrastructure, such as power grids, power plants, transformer substations and the like. Embedded devices comprise control apps that are being executed on the embedded device, e.g. by means of a computing component like a processor. Herein, control app executed by the embedded device calculates output values based on current and/or historical input values as well as internal state information and the like. The embedded device usually performs its function in real time.

Some embedded control devices are known to being configured to concurrently execute a number of control apps for controlling the technical system, wherein the embedded control device comprises a number of units comprising a broker unit configured to provide a message bus enabling serialized publish/subscribe topic-based communication between any of the number of control apps, the number of units, and the technical system, wherein the broker unit offers communication relevant functionalities, like managing publishing and subscribing of topics for the control apps.

For bug fixing, security patches, functional and/or nonfunctional improvements, and the like, a maintenance engineer may want to update the components running on the embedded control device. Conventionally, the running component is shut down, the new component is downloaded to the embedded device, the embedded device is rebooted, and the new component is started. Operational safety requirements may require shutting down parts of the technical system during the update, so as to avoid a critical event in the technical system to be "missed" in a time when neither the old nor the new version of the updated component are responsive. As a result of these difficulties, embedded control devices are scarcely updated, which is a security problem in critical infrastructure.

A problem arises when the component to be updated is the broker unit itself, since the broker unit provides decoupled Publish/Subscribe-based ("Pub/Sub-based") communication between any other components and is thus an essential platform component of the embedded control device. The broker unit is a component of the message bus and inter alia offers the following functionality to other components, like the control apps:
- connecting and disconnecting to/from the broker unit;
- registering and unregistering topics as publisher, along with meta information;
- subscribing and unsubscribing to/from individual topics providing a callback;
- sending data associated with registered published topics;
- receiving data associated with subscribed topics via the registered callbacks;
- subscribe to notifications on new topic registrations based on matching meta information.

The problem is here to maintain the consistency and reactivity of the system during the update. It is therefore desirable to update the broker unit without downtime because every functionality of the embedded control device relies on the availability of the broker unit, so the broker unit is needed for the system to keep working continuously. Thus, downtime should be avoided for the following reasons: On one hand, downtime is costly, because the maintenance engineer must supervise the update and thus at least attend and wait for it. Additionally, it is not always possible to shutdown critical functionality without further measures. For example, if the system is needed to stabilize or protect the technical system, damage to equipment and people could become possible during downtime. In these cases, avoiding downtime means avoiding additional risk assessment and measures (e.g., redundancy, fire fighters etc.). Thus, avoiding downtime reduces cost of mandatory updates and additionally makes it profitable to apply less critical updates, too.

It is therefore one object of the present invention to improve the updating of a broker unit executed on an embedded control device, especially to provide a way to update the broker unit without significant downtime of the embedded control device.

According to an aspect of the invention, an embedded control device configured to concurrently execute a number of control apps for controlling a technical system is provided, the embedded control device comprising a number of units, the number of units comprising: a broker unit configured to provide a message bus enabling serialized publish/subscribe topic-based communication between any of the number of control apps, the number of units, and the technical system. According to the invention, the number of units also comprises an updater unit configured to: in response to a new instance of the broker unit being executed on the embedded control device in addition to the old instance of the broker unit, publish an update topic on the message bus and cause a handover of control from the old instance to the new instance of the broker unit by transmitting a switch command in the update topic on the message bus.

That is, advantageously, the switch command that triggers the handover between the old instance of the broker unit and the new (updated) instance of the broker unit is transmitted as a payload of a command message on the same serialized message bus via which the respective instances of the embedded control device communicate with each other and with the technical system. This may provide the advantage of an atomic handover, so that the broker unit may be updated without significant delay.

The "old instance of the broker unit", and the "new instance of the broker unit" may be different versions of the same broker unit, implementing a corresponding broker functionality, wherein the new instance of the broker unit is an updated version of the old instance of the broker unit. That is, the old instance and the new instance are components that may have a same unit identifier, but may have different instance identifiers, versions numbers or the like, for example. Execution of the new instance on the embedded control device may start at a point in time that is later or substantially later than the point in time at which execution of the old instance starts on the embedded control device.

Specifically, any communication occurring on the message bus up to the switch command may be handled by the first instance of the broker unit, while any communication occurring on the message bus after the switch command may be handled by the second instance of the broker unit.

Herein, in particular, the embedded control device may be a computing device that is connected to and/or embedded within the technical (mechanical and/or electrical) system. The embedded control device is configured to perform control of the technical system, for example, by receiving input values, such as sampled measured values, and calculating and outputting output values, such as commands, setpoints for a switch or an actor, rip requests, and the like. The embedded device may operate according to predetermined time constraints that match operational and/or safety requirements of the technical system. For example, the embedded device may operate according to real-time or quasi real-time requirements so as to provide real-time or quasi real-time control of the technical system.

The technical system may comprise any number of controlled devices. In particular, the technical system may be a power grid or an electrical substation of a power grid and comprise a number of data sources and data targets. A data source of the technical system may be a sensor, or a measurement device configured to acquire a measured value, a line configured to output a measured value, another embedded control device, or another computing device, a server device, a cloud, or the like configured to supply measured and/or derived values indicative of a condition of the technical system. A data target of the technical system may be a switch, or an actor configured to act upon the technical system according to a setpoint value, a line, or another embedded control device, another computing device, a server device, a cloud or the like configured to receive a setpoint value, command, trip request or the like for the technical system.

The control app may be embodied by a program code executing on the embedded control device, the program code, when executed by the embedded control device, causing the embedded control device to perform the control of the technical system according to a control logic implemented by the program code.

The functionality for Pub/Sub topic-based communication provided by the broker unit, which is referred to herein as "message bus", may include allowing participants of the message bus to: register a topic with the broker unit (so-called "publishing"); subscribe to a topic that is or will be registered with the broker unit (so-called "subscribing"); transmit a message in a topic that the participant has registered with the broker unit; and receive messages in the topic or topics to which the participant is subscribed.

Herein, a participant of the message bus may be each of the control apps executed on the embedded control device, each the units of the embedded control device, and the technical system that can be coupled to the message bus of the embedded control device via an interface unit of the embedded control device.

The term "message", herein, may refer to data comprising a message header and a payload. The payload may comprise a measured value, a command, a setpoint value, a trip request, status information, handover information, app-specific data, and the like.

The broker unit thus may be configured to distribute a message that it receives in a given topic to all control apps that are subscribed to the given topic. The broker unit may provide the message bus via an Application Programming Interface (API) that may be accessible via a local network protocol, via a socket, by functional calls of a client library that is linkable to the respective control app, or the like.

Any topic may be identified by an identifier, such as a string of characters. The number of topics that are used for communication between the respective control apps and the technical system may be agreed in advance in accordance with a control protocol implemented by the technical system, the embedded control device and its control apps. Each topic may only be published by one control app or one of the number of units.

Likewise, for passing control from the old instance to the new instance of the broker unit during an update, a number of topics, and semantics and payloads of messages to be transmitted in the number of topics, may be agreed in advance in accordance with a proposed handover protocol that is implemented by the embedded control device.

The embedded control device may further comprise an interface unit that is configured to interface the message bus provided by the broker unit to a signal line physically connectable to the technical system. The interface unit may be a part of the broker unit or may be provided as a separate unit of the embedded control device. The respective control app may communicate with the technical system via the message bus, in particular, by transmitting messages to and/or receiving messages from the interface unit, in topics it has published and/or it is subscribed to using the broker unit, in accordance with a previously agreed control protocol.

For example, the interface unit may publish a sensor topic and/or may subscribe to an actor topic on the message bus by means of the broker unit. The interface unit may then transmit input values received via the signal line from the control target as messages in the sensor topic on the message bus, and the interface unit may transmit a data payload of a message received in the actor topic as an output value, such as a command or setpoint value for the technical system, on the signal line. Such communication taking place in the sensor topic and in the actor topic are examples of communication related to the technical system taking place on the message bus. It will be appreciated that the sensor topic and the actor topic are mere examples, and any number of topics can be used for communication according to the control protocol.

Notably, the message bus enables serialized communication. "Serialized" means, in particular, that the broker unit may distribute messages to the subscribed control apps in the same relative order in which they are received by the broker unit. For example, the broker unit may enqueue any message it receives in any topic, and may, one-by-one, take a respective message from the queue and distribute it to all sub control apps subscribe to the respective topic, before taking and processing a respective next message from the queue.

It will be appreciated that two or more different control apps, each implementing different functionality, may concurrently execute on the embedded control device.

For example, the embedded control device may comprise a further unit in form of a node manager unit that interfaces with an operator to receive a new instance of the broker unit to be installed and/or updated on the embedded control device. The node manager may notify the updater unit of the respective executions of the old instance and the new instance. Alternatively, the updater unit may auto-detect concurrent execution of the old instance and the new instance, for example, based on messages transmitted by the respective instances upon startup in a specific topic on the message bus according to the handover protocol.

The term "handover" may refer to an atomic transaction in which the old instance ceases, and the second instance takes up functionality for the embedded control device. In particular, the new instance may take up control at the same time at which the old instance ceases its functionalities, that is, the handover may be synchronous or quasi-synchronous with the old instance.

According to an embodiment of the control device, the old instance of the broker unit is configured to: in response to receipt of an prepare message in the update topic sending a set of broker state entries to the new instance of the broker unit over the message bus.

Thus, advantageously, before the handover occurs, a preparation period is set, during which both the old instance and the new instance may prepare for the handover by transferring broker state entries.

The prepare message may be, according to the handover protocol, a message that indicates an instance's readiness to start preparing for the handover.

For example, during the preparation period, the second instance may observe the control target-related communication on the message bus that is, at that time, performed by the first instance, may build up internal state information accordingly. Once it has built up the internal state information, it may indicate readiness for the handover by publishing its ready-to-switch message in its instance-specific state topic.

According to this embodiment, the old instance of the broker unit starts sending broker state entries e.g., via a handover topic on the message bus. Such broker state entries can comprise one or more of the following information, namely concerning each registered client (e.g., client id, client queue name), each topic the clients have registered (e.g., client id, topic meta information), each subscription (e.g., client id, topic id) and each discovery request (e.g., client id, request meta information). This includes entries for subscriptions of the old instance of the broker unit itself. The state transfer is done in background, e.g., in a separate broker client thread, while the broker server thread keeps processing data.

In this context, the old instance may transmit the broker state entries to the new instance and indicate readiness for the handover by publishing a ready-to-switch message in its specific state topic when the broker state entries have been transmitted.

According to a further embodiment of the embedded control device, the old instance of the broker unit is configured to: in response to receipt of the prepare message interrupting a registration of new publish or subscribe requests from the control apps during a hold back time duration and storing each publish or subscribe request from the control apps that has been received during the hold back time duration.

According to this embodiment, the old instance of the broker unit interrupts its registration service, e.g., by setting an internal flag. After this flag is set, incoming connect requests, topic registration requests, and new subscription requests are not directly processed, but stored for later by the broker unit. This is advantageous to manage a complete transfer of the broker state entries from the old instance to the new instance of the broker unit.

The transfer of broker state entries is done in the background during the hold back time duration. This state entry data does not change during the process, because the flag is set and any incoming message beyond normal data messages are stored for later. After the final handover, the new instance of the broker unit may handle the registration request with an only minor time delay.

In this context, according to another embodiment of the embedded control device, the old instance of the broker unit is configured to: in response to receipt of the switch command handing over a responsibility for a message queue for messages received from the control apps over the message bus to the new instance of the broker unit. Preferably, the hand-over of the responsibility is being performed by releasing the message queue at the old instance of the broker unit and sending a handover message to the new instance over the message bus using a dedicated topic, where the new instance of the broker unit in turn is configured to, in response to receipt of the handover message, opening its message queue and starting to process messages.

According to this embodiment, until the switch command is received, the old instance of the broker unit version is still responsible for the message queue and - except for the registration requests - forwards incoming data to the corresponding subscribers. On receiving the switch command, the old instance of the broker unit releases the message queue and forwards the switch command to the broker client queues. Now, the new instance of the broker unit receives the switch command and starts its broker thread, which opens the message queue at the new instance of the broker unit and starts receiving messages from this message queue and processing any message according to the normal routine. After starting the broker thread, the broker client thread changes the state to normal operation. The message queue, however, is configured to retain enqueued messages and accept new messages from any of the control apps also in the meantime, while none of the broker instances has opened it.

In this context, according to another embodiment of the embedded control device the old instance of the broker unit is configured to: after handing over the responsibility for the message queue to the new instance of the broker unit, sending the stored publish or subscribe requests to the new instance of the broker unit over the message bus.

According to this embodiment, for example, the client thread of the old instance of the broker unit puts any request messages received after setting the flag starting the hold back time duration back to the message queue without modifying the header information. The new instance of the broker unit thus will process these registrations as if they had recently been sent by the other components, e.g., create a new topic and send an acknowledge to the corresponding client queue. After all such requests have been replayed by the old instance of the broker unit, it unsubscribes from the new instance of the broker unit and terminates.

According to a further embodiment of the embedded control device, the embedded control device is configured to containerize the number of control apps and the number of units, such that the message bus is the only means of communication available between the number of control apps, and the number of units.

Herein, containerizing may refer to partly or fully isolating the control app and the units (like the broker unit) from its environment. The message bus may be the only means of communication available to the components, and more preferably, may be the only means of communication available to each component in relation to communication with other apps and units of the embedded control device.

Thus, it may advantageously be ensured that only the serialized message bus is used by any component both for operational communication for controlling the technical system and for performing the handover. In this way, it may be ensured that there is a clear temporal order defining the order of occurrence of messages of the handover protocol (such as the switch command, and, optionally, the prepare message) and messages of the control protocol.

According to another embodiment of the embedded control device, the updater unit and the broker unit being implemented as respective ones of the number of apps executed on the embedded control device.

That is, the updater unit and the broker unit may be implemented in software. For example, the proposed solution may be a package of platform apps, such as a broker app and an updater app, that are executing on an embedded control device and convert the embedded control device into the embedded control device according to the invention.

According to another embodiment, the number of units also comprises an app installer unit that is configured to load the new instance of the broker unit onto the embedded control device.

According to this embodiment, the new instance of the broker unit can be loaded onto the embedded control device before the update process is started.

According to another aspect, the invention is directed to a method for updating a broker unit of an embedded control device that is configured to concurrently execute a number of control apps for controlling a technical system, the embedded control device comprising a number of units, comprising a broker unit configured to provide a message bus enabling serialized publish/subscribe topic-based communication between any of the number of control apps, the number of units, and the technical system. The embedded control device also comprises an updater unit.

According to the invention, the method comprises the following steps: in response to a new instance of the broker unit being executed on the embedded control device in addition to the old instance the updater unit publishing an update topic on the message bus, and the updater unit causing a handover of control from the old instance to the new instance of the broker unit by transmitting a switch command in the update topic on the message bus.

The features of the method and of any of its embodiments also apply to the embedded control device and of any of its embodiments and vice versa.

According to another aspect, a computer program product is provided comprising a program code that, when executed on the embedded control device or any of its embodiments, is configured to cause the embedded device performing the method for updating a broker unit.

The computer program product may be embodied as a memory card, USB stick, CD-ROM, DVD which way be inserted into the embedded control device, or as a file which may be loaded onto the embedded control device. For example, such a file may be provided by transferring the file comprising the computer program product from a wired or wireless communication network.

The features of the computer program product and of any of its embodiments also apply to the embedded control device and of any of its embodiments, in particular when comprising the old instance and/or the old instance and the new instance of the broker unit formed by loading the program code of the computer program product onto the embedded control device and executing the program code of the computer program product on the embedded control device.

That is, features, advantages, definitions, and embodiments described herein in relation to the computer program product also apply to the embedded control device and the method for updating the broker unit and vice versa.

In particular, the computer program product is configured to form the old instance of the broker unit and is also configured to form the new instance of the broker unit, when executed on the embedded control device.

In other words, what this means is, in particular, that a broker unit instance formed on the embedded control device upon execution of the program code is able to perform all steps of the proposed handover protocol as and when needed. For example, the broker unit instance formed in this way is configured to act as the "new instance" when it is installed as an update for a current instance (old instance) of the broker unit that it is going to replace. Likewise, the broker unit instance formed in this way is configured to act as the "old instance" when (such as, at a later point in time), another update is installed, by which it itself is going to be replaced.

More particularly, a broker unit instance formed by executing the program code of the computer program product on the embedded control device may, upon startup, determine whether it is the old instance of the broker unit or the new instance of the broker unit.

It may be determined that the broker unit instance is the old instance, if no other broker unit instance having the same identifier is currently executing on the embedded control device. Likewise, it may be determined that the broker unit instance is the new instance, if another broker unit instance having the same identifier is currently executing on the embedded control device.

Alternatively, information as to whether the broker unit instance is the old instance or the new instance may be given to the broker unit instance by the updater unit or by an external operator. For example, a maintenance operator may decide whether to install the computer program product as a first install or as an update install. Alternatively, the broker unit instance may, for example, observe messages on the message bus, such as messages in a respective state topic, to learn whether a previous instance of the broker unit is already executing on the embedded control device or not.

That is, if the broker unit instance is the old instance, it can directly enter the operating state. However, if it is the new instance, it can enter an observing state. In the observing state, the new instance can observe how the message bus is currently being operated by the old instance, to initialize and collect broker state entry information from the old instance of the broker unit. In this way, the new instance can prepare for the handover and can advantageously already know a history of operation of the message bus, may have access to a sliding window of input data, etc., when it is switched in by the switch command.

The switched-out state of the old instance of the broker unit maybe a shutdown state, or it may be a post-switch state in which the old instance performs cleanup steps such as transmitting post-switch information to the new instance, as will be discussed further below.

As can be seen from the foregoing, the broker unit provides the basic infrastructure for Pub/Sub-based message bus systems on lower-level communication. Therefore, during the broker unit update, the following consistency and reactivity criteria must be met:
- Connecting and disconnecting to the broker unit is not time-critical, but existing connections must not get lost. Attempts to connect and disconnect may fail (and be retried), but it must be consistent.
- Requests for registering and subscribing topics must not get lost and must be processed and acknowledged or rejected (only for illegal requests) within due time (e.g., 1 second).
- Each newly registered/unregistered topic consistently leads to the demanded discovery notifications within due time (e.g., 1 second).
- Throughout the update, data for published topics can be sent continuously and is received by each subscriber exactly once within a limited time ("latency"). The normal latency of e.g. 10µs from sender to receiver can be increased temporarily during the update ("latency peak"). A short peak of e.g. 1ms latency is acceptable ("height" of the peak). The normal latency must be met after e.g. 5ms, again ("duration" of the peak).

Thus, the problem is to update the broker unit in a way so that its service is still good enough during the update so that the system can continue to work without downtime. Due to the challenging latency requirements and the importance of the broker unit, this cannot be achieved by shutting down the old instance, spinning up the new instance and reconnecting everything.

Instead, the old instance of the broker unit preferably should hand-over the broker state entries comprising connections, registered topics, subscriptions and quickly and consistently switch-over the responsibility to process new requests and data. While the old instance of the broker transfers its responsibilities to the new instance it is important to ensure consistency. For instance, it would lead to an inconsistent system state, if during the update a control app could subscribe to a topic and receive an acknowledge from the old instance of the broker unit, while the information on subscriptions had already been transmitted to the new instance of the broker unit, so that the subscription is lost, because the control app effectively does not receive the required data.
Concluding, the described embedded control device, method and computer program product provide a technical solution for updating a Pub/Sub broker unit without downtime. The main technical problem is to maintain consistency and reactivity of the system by a quick and atomic switch-over from the old instance of the broker unit to the new one. Supporting activities (e.g., downloading the new instance of the broker unit) may be needed in addition. By means of the invention, updates (such as security patches) can be applied at reduced cost, because downtime is avoided.

Further embodiments, features and advantages of the present invention will become apparent from the subsequent description and dependent claims, taken in conjunction with the accompanying drawings, in which:
- Fig. 1: shows a functional diagram of an embedded control device and a technical system according to an exemplary embodiment;
- Fig. 2: shows an exemplary embodiment of a functional architecture view of the relevant software components of an embedded control device; and
- Fig. 3: shows a timeline diagram of an exemplary embodiment of an update process to update the broker unit of an embedded control device.

In the Figures, like reference numerals designate like or functionally equivalent elements, unless otherwise indicated.

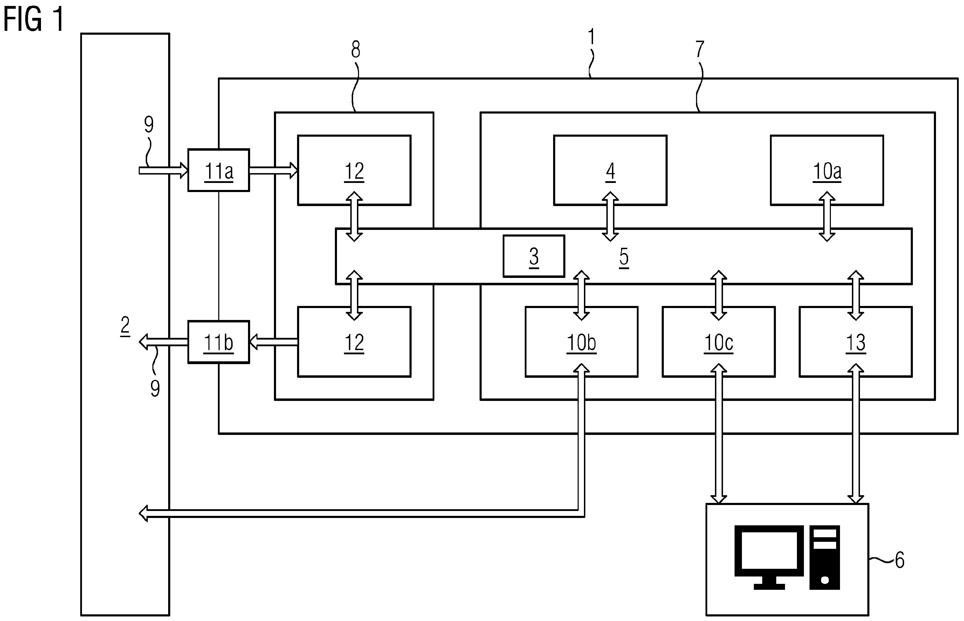

An exemplary embodiment will be described in relation to Fig. 1, which shows a functional diagram of an embedded control device 1 and a technical system 2. The embedded control device 1 is embedded into and/or connected to the technical system 2. The technical system 2 may be any electrical and/or mechanical system or process, that is being controlled, monitored, protected and/or supervised by the embedded control device. By way of an example, the technical system may be an electrical power grid (e.g., a transmission grid, a distribution grid or a microgrid), or a substation of an electrical power grid and the embedded control device may be a substation controller, a remote terminal unit, a merging unit, a protection relay, a power-quality device, or any combination of the aforementioned. In general, the embedded control device may be called an IED (intelligent electronic device).

The skilled person will appreciate that on a structural level (not shown in the figures), the embedded control device 1 may comprise a central processing unit (CPU), a memory device, such as a RAM, a storage unit, such as an EEPROM, a timer unit, and the like. Program code may be loaded onto the storage unit. The processing unit may execute the program code to be loaded from the storage unit into the memory unit. The program code may refer to the timer unit in order to comply to a predetermined real-time requirement, and the like.

On a functional level, the embedded control device 1 comprises a broker unit 3 and an updater unit 4, a message bus 5, and is furthermore configured to execute a number of control apps 10. By way of example only, the control apps 10 may comprise a control app 10a to provide protection functions for the technical system 2, a control app 10b providing communication services for the technical system (like IEC 61850 GOOSE and/or SMV communication services), and a control app 10c providing a configuration platform service for the embedded control device 1 by connecting the embedded control device to an operator's computer 6.

Furthermore, the embedded control device 1 comprises a core system 7 (containing the broker unit 3, the control apps 10 and at least partially the message bus 5) and an interface unit 8. The interface unit 8 comprises hardware connectors 11 that are connected to the technical system 2 using physical signal lines 9. In particular, and by way of example only, the hardware connectors 11 may comprise an analog and/or digital input connector 11a that is connected to one or more sensors in the technical system and a binary output connector 11b that is connected to one or more actors or switches in the technical system 2. The interface unit 8 further comprises respective interface apps 12 that are participants of the message bus 5 and connect the hardware connectors 11 to the message bus 5. The interface unit 8 (interface apps 12 and connectors 11 when working in conjunction) is configured to enable control apps 10 to communicate with the technical system 2 via the physical signal lines 9 by transmitting and receiving messages over the message bus 5 as publishers and/or subscribers.

The control apps 10 are containerized, and the message bus 5 provided by the broker unit 3 is the only means of communication available to the control apps 10 for communicating with each other and for communication with the updater unit 4 and the interface unit 8 (for connecting to the technical system 2).

In particular, a serialized publish/subscribe topic-based communication provided by the message bus 5 may be realized as follows. The broker unit 3 is a platform app running on top of an embedded operating system of the embedded control device 1. In addition, a message bus client library (not shown) is linked to each app. Herein, the term "app" (also named "component") may refer to the control apps 10, to an app of the broker unit 3 itself, to an app of the updater unit 4, and to an app of the interface unit 8. The message bus client library may be linked to these apps at build time, such as when creating a computer program product stored in a memory of the embedded control device 1. Alternatively, the embedded control device 1 (its operating system or the like) may link the message bus client library to the respective app upon startup at runtime.

When the embedded control device 1 is operating, the broker unit 3 provides a message bus 5 that enables serialized publish/subscribe topic-based communication between any of the number of control apps 10, the broker unit 3, the updater unit 4, and the technical system 2. That is, when loaded onto and executing on the embedded control device 1, the respective control app can control the technical system 2 by transmitting and receiving messages in respective topics on the serialized message bus 5.

In particular, using the message bus client library, the apps (e.g., the control apps 10) can connect to the broker unit 3, publish a new topic, subscribe to an existing or a not-yetexisting topic, transmit messages in topics they have published, and receive - for example, via callbacks that they provide to the message bus client library - messages in topics they have subscribed. Topics are identified either via a fixed string (e.g. "/app1/topic1") or using a wildcard string (e.g. "/fixed1/*/fixed2"), wherein the asterisk '*' matches any sequence of characters without slashes. Each topic may only be published by one of the apps. Wildcards can be used for subscriptions only. After subscribing to a topic, the message bus client library of the subscribing app is notified by the broker unit 3 about all matching topics at the time of the subscription and about every matching topic as and when such a matching topic is published at a later point in time.

The message bus client library automatically subscribes such matching topics. In this way, the subscribing apps may subscribe to a topic before it is created. This is especially useful for wildcard subscriptions. In the case of a wildcard subscription, additional matching topics, that are published at a later time (i.e., after the wildcard subscription took place), will be subscribed to automatically.

In this way, a sender/multiple-receiver communication may be realized: The publishing app, that has published a given topic can transmit messages in said topic. These messages are transmitted from its message bus client library to the broker unit 3. The broker unit 3 multicasts the messages to all apps that are subscribed to this topic at that time. In this way, the message bus 5 abstracts away a physical communication channel and protocol, as used within the embedded control device 1 and/or on the signal line 9.

Furthermore, the message bus 5 processes all incoming messages strictly sequentially, both at the broker unit 3 side and at the message bus client library side. The broker unit takes an incoming message from the queue(s) and if it is a valid message from a registered publisher, the message is sent to all registered subscribers before processing the next message. The message bus client takes an incoming message from the queue(s) and calls the registered callback synchronously before processing the next message.

Thus, the proposed embedded control 1 device contains a special broker unit together with a broker-specific handover protocol, which enables broker unit updates without downtime. In the software architecture it is generally distinguished between (normal) apps and platform apps. For the update concept, the broker unit 3 and the updater unit 4 are the most important platform apps. Two more platform apps are used for downloading, installing and removing apps and platform apps (the app installer unit 13) as well as for starting and stopping apps (the node manager, not shown in figure 1). In the application layer, multiple apps, like the control apps 10, may run continuously using the broker unit 3 without being affected by the update.

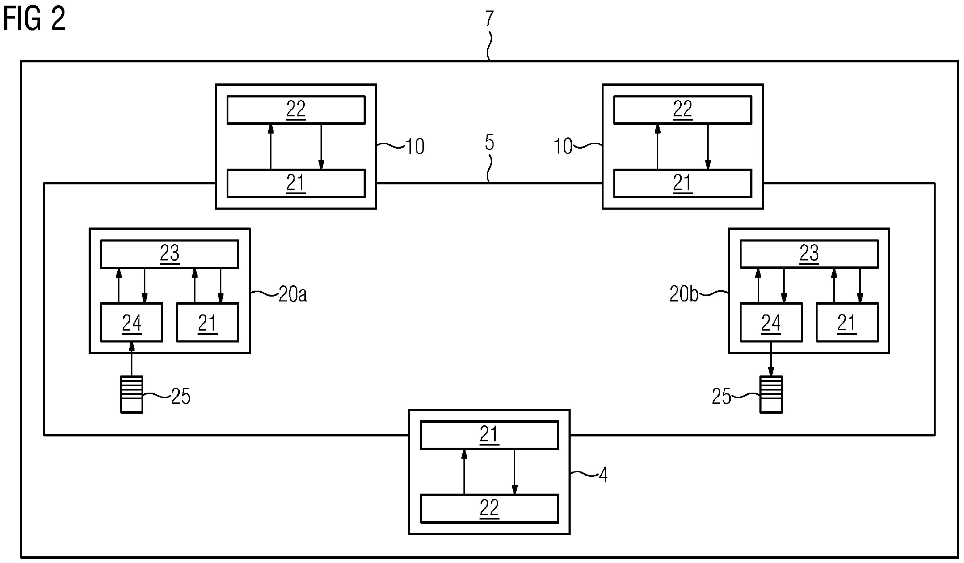

In figure 2, an architecture view showing the relevant software components of the core system 7 of the embedded control device 1 is given in order to explain the update process of the broker unit 3. In this context, figure 2 shows the message bus 5 with an old instance 20a of the broker unit 3 and a new instance 20b of the broker unit (both instances 20a, 20b respectively containing a broker unit logic 23, a client library 21, and a server library 24), the updater unit 4 (containing program code 22 and a client library 21) and two exemplary, unaffected control apps 10, the respective program code 22 of which uses the message bus 5 via its respective client library 21. The old and the new instances 20a, 20b of the broker unit 3 are also special message bus clients, e.g., they send their respective states via individual topics ("STATE"), which are subscribed to by the updater unit 4 via a wildcard-subscription. The new instance 20b of the broker unit 3 also subscribes to the state and to a "broker handover" topic ("BHO") of the old instance 20a of the broker unit 3 that shall be replaced. The updater unit 4 sends update command messages to the two instances 20a, 20b of the broker unit 3 via a corresponding "update" topic ("UPD") subscribed to by the two instances 20a, 20b of the broker unit 3. However, this happens not simultaneous, because the old (and still active) instance 20a of the broker unit 3 receives the message first via its broker queue 25a. All this communication may be realized e.g. via corresponding POSIX (portable operating system interface) message queues. Each app instance (including the instances 20a, 20b of the broker unit 3) has its own client queue to receive messages from the broker unit 3. The broker unit 3 has an additional broker queue 25 to receive messages from the client libraries 21 of the other apps. In operation, the broker unit 3 basically forwards received messages from this broker queue 25 to subscribed clients. During the update, this broker queue 25 is handed over from the old instance 20a to the new instance 20b of the broker unit 3.

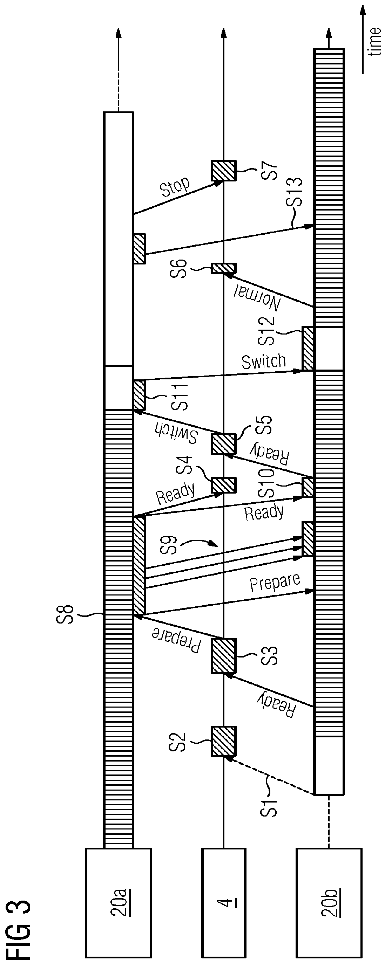

The update process will be explained in more detail with reference to figure 3, which shows a timeline diagram of the update process as it is performed by the updater unit 4 and the old instance 20a as well as the new instance 20b of the broker unit. During the update process, the updater unit 4 implements a handover protocol for updating the broker unit 3 that will be described in detail below.

For updating the broker unit 3, the behavior of the message bus 5 is essential and thus described in detail in this section first. The message bus 5 can use different communication channels (e.g. TCP, POSIX message queues), however, for updating the broker unit 3 without downtime with high latency requirements, the broker unit 3 preferably uses POSIX messages queues 25a, 25b. For this channel implementation, the broker unit 3 uses one broker queue 25 with a configurable name (default: "MBQUEUE") for messages from the client libraries 21 to the broker unit 3. When an app (e.g. control apps 10) starts in its own container, it initializes the message bus connection by calling the connect function of its client library 21. During connect, the client library 21 opens a new message queue with a configurable, unique name (default: APP<uid>, where "uid" stands for a unique app instance identifier which is individual for each instance and may be even random) from which it accepts messages from the broker unit 3. Then the client library 21 sends a connect message to the broker unit 3 providing required meta data, including the client queue 21 name. The broker unit 3 takes this message from the broker queue 25, stores the information about the new client and opens the client queue 21 for writing. Then it sends an acknowledge message to the client via the client queue 21. Thus, there is one broker queue 25, to which all apps are writing subsequently and one client 21 queue for each app and each platform app, to which only the broker unit 3 has write access and only the app has read access. Based on this bidirectional communication channel between the broker unit 3 and the client library 21, the other broker unit 3 functionality is realized. The app can call register providing required meta data, then the client library sends a register message to the broker unit 3 via the broker queue 25. The broker unit 3 processes message per message from the broker queue 25 until it reaches this registration message. Then the broker unit 3 checks the meta information and decides whether the registration is allowed. If this is the case, the broker unit 3 creates a new topic according to the provided meta information (name, publisher, message format, ...) and sends an acknowledge message with the assigned topic id to the client library 21 of the respective app via the corresponding message queue (otherwise a negative acknowledge). Additionally, the broker unit 3 sends notification messages to all clients, which have registered a discovery subscription with matching meta information (e.g., wildcard topic names). After receiving the acknowledge, the published topic is setup on client side for sending data. The corresponding app can then use the client library 21 to send data via the broker queue 25 providing a valid topic name or id. This data is then sent to the broker queue 25 with the topic name as meta information. When the broker unit 3 receives a data message from the broker queue 25 it checks whether this client may send data via the provided topic, then checks the table of subscriptions for this topic id and sends the data via the client queue 21 of each currently subscribed app. Apps can subscribe to a topic via the client library 21, which first sends a discovery subscription message to the broker queue 25 with the topic name (or other meta information) or topic id. The broker unit 3 stores the discovery information and sends an acknowledge via the corresponding client queue 21. If there are matching topics already registered, then the broker unit 3 sends a corresponding discovery notification immediately to this client queue 21, otherwise the broker unit 3 sends the notification later as described before, i.e., as soon as a matching topic is newly registered. This notification contains meta information on the matching topic, including its topic id. The default action by the client library 21 is to send a subscription message to the broker queue 25 with that topic id (however, it can also be discarded by the app), wait for the acknowledge to arrive in the client queue 21 and then enable the subscription (also informing the app via a callback). Unregistering topics, subscriptions, discovery requests and disconnecting works in the same way via the queues 21, 25.

Now turning to the explanation of the update process of the broker unit 3 using the updater unit 4. The updater unit 4 is a platform app which manages updates by sending update commands to special topics when the apps (incl. the broker unit 3) to update are in certain states. The updater unit 4 subscribes to all apps' state topic (/STATE/<UID) via wildcard subscription, where UID is the app instance's unique identifier. Each app subscribes to an update topic /UPDATE/<appID>, where appID is an identifier for the role of an app. In this example, the appID "2" shall be assigned to (each instance 20a, 20b of) the broker unit 3. In an update scenario, two app instances with the same appID (i.e. 2) but different UIDs appear, which the updater unit 4 notices via the state topic. The new instance 20b of the app (in this case, the broker unit 3) is downloaded and installed in background by the app installer unit 13. The node manager triggers the update by starting the new instance 20b of the broker unit 3 in a dedicated container. In step S1, the new instance 20b of the broker unit 3 initializes its data structure and registers at the message bus 5 (i.e., the new broker version registers at the old broker instance). In step S2, the updater unit 4 notices that a new instance 20b for an existing appID, i.e. the old instance 20a of the broker unit 3, enters the state "Ready" via the new, automatically subscribed STATE topic of the new instance 20b of the broker unit 3, it starts (in step S3) a new update procedure by sending a "Prepare" command to the corresponding update topic, in this case /UPDATE/2, because the broker unit 3 has appID = 2.

Then the updater unit 4 waits until both instances 20a, 20b of the broker unit 3 (the active apps with appID = 2) enter the states in which they are ready for the switch command, i.e., the old instance 20a of the broker unit 3 reports the state "Ready" (for switch out) in step S4 and the new instance 20b reports the state "Ready" (for switch in) in step S5. Then the updater unit 4 sends a "Switch" command message via the /UPDATE/2 topic of the broker unit 3. As soon as both instances 20a, 20b of the broker unit 3 report the expected states, the update procedure is completed successfully from the updater unit's 4 point of view, i.e., the new instance 20b of the broker unit 3 (in step S6) reports "Normal" and the old instance 20a of the broker unit 3 (in step S7) reports that it is now shutting down ("Stop").

In particular, the old instance 20a of the broker unit 3 receives the update command messages (e.g. "Prepare") via its broker queue 25 before forwarding it to the client queue 21 of the new instance 20b of the broker unit 3. Before the old instance 20a of the broker unit 3 forwards this command message, it sets an internal flag (e.g. REG_SUSPEND) in step S8. After this flag is set, incoming connect requests, topic registration requests, and new subscription requests are not directly processed, but stored for later by the old instance 20b of the broker unit 3. The old instance 20b of the broker unit 3 then forwards the "Prepare" message, which is received by the client libraries 21 of the old instance 20a and the new instance 20b of the broker unit 3, respectively. The new instance 20b of the broker unit 3 can ignore this message. However, the old instance 20a of the broker unit 3 starts sending broker state entries via its BHO topic in step S9. E.g., if the old instance 20a of the broker unit 3 has UID=12, then the topic /BHO/12 is used. Via this topic, broker state entries are sent from the old instance 20a to the new instance 20b of the broker unit 3 for each registered client (client id, client queue name), each topic the clients have registered (client id, topic meta information), each subscription (client id, topic id) and each discovery request (client id, request meta information). This includes broker state entries for its own subscriptions. The transfer of the broker state entries is done in background in a separate broker client thread, while the broker server 24 thread keeps processing data. This state entry data does not change during the process, because the REG_SUSPEND flag is set and any incoming message beyond normal data messages is stored for later.

The new instance 20b of the broker unit 3 receives these messages via its subscription and stores them in its internal tables. After the old instance 20b of the broker unit 3 has sent all broker state entries, it changes the state to "Read" (for switch out), which is received by the updater unit 4 in step S4, but also by the new instance 20b of the broker unit (in step S10), as it is also subscribed to /STATE/12, the state topic of the old instance 20a of the broker unit 3. After the new instance 20b of the broker unit 3 has processed the received broker state entries and reached the state change from the old instance 20a of the broker unit 3 (which is received in-order, regardless of the topic due to the queue setup of the broker architecture), it changes the state to "Ready" (for switch in), which is received by the updater unit 4 in step S5. The state entry transfer is now completed, and the updater unit 4 triggers the switch by sending the "Switch" command message.

Until this message is received, the old instance 20a of the broker unit 3 is still responsible for the MBQUEUE (broker queue 25) and forwards incoming data to the corresponding subscribers. The "Switch" command message is thus received first by the old instance 20a of the broker unit 3 via its MBQUEUE. It is the last message the old instance 20a of the broker unit 3 takes from this broker queue 25. On receiving this message, the old instance 20a of the broker unit 3 first releases the MBQUEUE in step S11 and only afterwards forwards the "Switch" command message to the new instance's 20b client queue 21. The new instance 20b of the broker unit 3 receives the "Switch" command message and starts the broker thread, which opens the MBQUEUE at the new instance 20b in step S12and starts receiving messages from this queue and processing any message according to the normal routine.

After starting the broker thread, the new instance's 20b broker client thread changes the state to "Normal". The client thread of the old instance 20a of the broker unit, in step S13, puts any of the stored request messages received after setting the REG_SUSPEND flag back to the MBQUEUE without modifying the header information. The new instance 20b of the broker unit 3 thus will process these registrations as if they had been sent recently by the other components, e.g. create a new topic and send an acknowledge to the corresponding client queue. After all such requests have been replayed by the old instance 20a of the broker unit 3, it unsubscribes from the new broker version and terminates (step S7). In summary, the "Prepare" command is received by the old instance 20a of the broker unit 3 via the broker queue first, which sets the REG_SUSPEND flag before forwarding the "Prepare" message to the broker client queue of the new instance 20b. While the old instance 20a keeps operating (and storing management request messages for later), the broker clients transfer the state in form of broker state entries from the old instance 20a to the new instance 20b via a special dedicated topic at the message bus 5. After receiving the "Switch" command, the old instance 20a first releases the MBQUEUE before forwarding it to the broker client queue. The new instance 20b then starts processing messages from the MBQUEUE and is thus in normal operation. The old instance 20a replays any management request messages received since the "Prepare" message during the hold-back time, which are now processed normally by the new instance 20b.

Effectively, the new instance 20b of the broker unit 3 takes over the MBQUEUE with minimal delay. Data messages from this queue are processed with minimal increased latency because the old instance 20a of the broker unit 3 closes the MBQUEUE, sends the "Switch" command to the client queue of the new instance 20b of the broker unit 3, which then starts the broker thread and opens the MBQUEUE. The latency for other messages (e.g., subscription requests) is affected by the hold-back time starting from the "Prepare" command message, but the latency requirement is more relaxed for these messages.

In summary, the invention increases the maintainability and security of embedded control systems by reducing the need for downtime during updates. Formerly, software updates were rarely rolled out, because a significant downtime of several minutes is required due to restarting or even rebooting. Now, the broker unit 3 can be updated during full operation without downtime. This reduces cost for updates (time, money, effort) and enables more frequent updates. This again shortens the time to patch security leaks of this central platform component, which makes the products ready for online connectivity.

Although the present invention has been described in accordance with preferred embodiments, it is obvious for the person skilled in the art that modifications are possible in all embodiments.

## Claims

1. An embedded control device (1) configured to concurrently execute a number of control apps (10) for controlling a technical system (2), the embedded control device (1) comprising a number of units comprising:
a broker unit (3) configured to provide a message bus (5) enabling serialized publish/subscribe topic-based communication between any of the number of control apps (10), the number of units, and the technical system (2); and
an updater unit (4) configured to:
- in response to a new instance (20b) of the broker unit (3) being executed on the embedded control device (1) in addition to the old instance (20a) of the broker unit (3), publish an update topic on the message bus (5); and
- cause a handover of control from the old instance (20a) to the new instance (20b) of the broker unit (3) by transmitting a switch command in the update topic on the message bus (5).

2. The embedded control device (1) of claim 1,
**characterized in**
**that** the old instance (20a) of the broker unit (3) is configured to:
- in response to receipt of a prepare message in the update topic sending a set of broker state entries to the new instance (20b) of the broker unit (3) over the message bus (5).

3. The embedded control device (1) of claim 2,
**characterized in**
**that** the old instance (20a) of the broker unit (3) is configured to:
- in response to receipt of the prepare message interrupting a registration of new publish or subscribe requests from the control apps (10) during a hold back time duration; and
- storing each publish and/or subscribe request from the control apps (10) that has been received during the hold back time duration.

4. The embedded control device (1) of claim 3,
**characterized in**
**that** the old instance (20a) of the broker unit (3) is configured to:
- in response to receipt of the switch command handing over a responsibility for a message queue (25) for messages received from the control apps (10) over the message bus (5) to the new instance (20b) of the broker unit (3).

5. The embedded control device (1) of claim 4,
**characterized in**
**that** the old instance (20a) of the broker unit (3) is configured to:
- after handing over the responsibility for the message queue (25) to the new instance (20b) of the broker unit (3), sending the stored publish and/or subscribe requests to the new instance (20b) of the broker unit (3) over the message bus (5).

6. The embedded control device (3) of any of claims 1 to 5, **characterized by**
being configured to containerize the number of control apps (10) and the number of units, such that the message bus (5) is the only means of communication available between the number of control apps (10), and the number of units.

7. The embedded control device (1) of any of claims 1 to 6, **characterized by**
updater unit (4) and the broker unit (3) being implemented as respective ones of the number of apps (10) executed on the embedded control device (1).

8. The embedded control device (1) of any of claims 1 to 7, **characterized by**
the number of units also comprising an app installer unit (13) that is configured to load the new instance (20b) of the broker unit (3) onto the embedded control device (1).

9. A method for updating a broker unit (3) of an embedded control device (1) that is configured to concurrently execute a number of control apps (10) for controlling a technical system (2), the embedded control device (1) comprising a number of units, comprising the broker unit (3) configured to provide a message bus (5) enabling serialized publish/subscribe topic-based communication between any of the number of control apps (10), the number of units, and the technical system (2), and an updater unit (4), wherein the method is **characterized by** performing the following steps:
- in response to a new instance (20b) of the broker unit (3) being executed on the embedded control device (1) in addition to the old instance (20a) the updater unit (4) publishing an update topic on the message bus (5); and
- the updater unit (4) causing a handover of control from the old instance (20a) to the new instance (20b) of the broker unit (3) by transmitting a switch command in the update topic on the message bus (5).

10. A computer program product comprising a program code that, when executed on the embedded control device (1) of any of claims 1 to 8, is configured to cause the embedded device performing the method according to claim 9.
